(19) Europäisches Patentamt
European Patent Office
Office européen des brevets

(11) Numéro de publication: **0 100 695**
**B1**

(12) # FASCICULE DE BREVET EUROPEEN

(45) Date de publication du fascicule du brevet: **31.07.85**

(51) Int. Cl.⁴: **C 01 B 3/04**

(21) Numéro de dépôt: **83401270.0**

(22) Date de dépôt: **20.06.83**

(54) **Cellule photosensible de décomposition de l'eau.**

(30) Priorité: **28.06.82 FR 8211280**

(43) Date de publication de la demande: **15.02.84 Bulletin 84/7**

(45) Mention de la délivrance du brevet: **31.07.85 Bulletin 85/31**

(84) Etats contractants désignés: **AT BE CH DE GB IT LI LU NL SE**

(56) Documents cités:
**GB - A - 2 060 702**

**JOURNAL OF THE AMERICAN CHEMICAL SOCIETY, vol. 103, no. 16, 12 août 1981, pages 4685-4690, Gaston PA., USA, D. DUONGHONG et al.: "Dynamics of light-induced water cleavage in colloidal systems"**

(73) Titulaire: **Etablissement Public dit: CENTRE NATIONAL DE LA RECHERCHE SCIENTIFIQUE (CNRS), 15, Quai Anatole France, F-75007 Paris (FR)**

(72) Inventeur: **van Damme, Henri, 166 allée des Seringas, F-45160 Olivet (FR)**
Inventeur: **Fripiat, José, 31, La Tuilerie Marcilly en Vilette, F-45240 La Ferté Saint-Aubin (FR)**
Inventeur: **Nijs, Hubert, 1, Allée André Gide, F-45100 Orléans (FR)**
Inventeur: **Marceau, Philippe, 11, rue Lazare Carnot, F-45100 Orléans la Source (FR)**
Inventeur: **Obrecht, 23, rue du Four, F-45380 La Chapelle Saint-Mesmin (FR)**

(74) Mandataire: **Ahner, Francis et al, CABINET REGIMBEAU 26, avenue Kléber, F-75116 Paris (FR)**

EP 0 100 695 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne une cellule photosensible de décomposition de l'eau, du type constitué par un milieu aqueux contenant un photosensibilisateur chargé positivement tant à l'état réduit qu'à l'état oxydé, un accepteur, un catalyseur de formation d'oxygène et un catalyseur de formation d'hydrogène.

La présente invention a eu pour but de mettre au point l'architecture et la composition d'un système de conversion photochimique de l'énergie solaire en énergie chimique, grâce à la décomposition photochimique de l'eau en hydrogène et en oxygène, fondée sur le schéma réactionnel suivant qui est directement inspiré de la photosynthèse naturelle:

$$D \xrightarrow{h\nu} D^* \quad (1)$$

$$D^* + A \longrightarrow D_{OX} + A_{RED} \quad (2)$$

$$A_{RED} + H^+ \xrightarrow{\text{Cat. red.}} A + 1/2\ H_2 \quad (3)$$

$$D_{OX} + OH^- \xrightarrow{\text{Cat. ox.}} D + 1/4\ O_2 + 1/2\ H_2O \quad (4)$$

L'étape initiale du processus est l'absorption d'un photon par une espèce moléculaire à l'état fondamental, à savoir le photosensibilisateur D. Elle aboutit à la formation d'un état électronique excité, $D^*$, dans lequel l'énergie photonique initiale est stockée sous une forme éminemment fugace.

La deuxième étape est un transfert d'électron entre $D^*$ et un accepteur. Cette étape, qui est rendue possible grâce à l'énergie emmagasinée par $D^*$, aboutit à la formation d'un couple électrochimique, $D_{OX}+A_{RED}$, dans lequel l'énergie est toujours stockée sous une forme transitoire.

Dans la troisième étape, cette énergie électrochimique est convertie en énergie chimique stable grâce, d'une part à la formation d'hydrogène par $A_{RED}$, et d'autre part à la formation d'oxygène par $D_{OX}$. Au cours de cette étape, D et A sont régénérés. La réaction globale s'écrit donc comme suit:

$$H_2O + 2\ h\nu \rightarrow H_2 + 1/2\ O_2 \quad (5)$$

28 kcal sont stockés sous forme d'un gramme d'hydrogène au cours de ce processus, dont le rendement dépend évidemment de la fréquence $\nu$ des photons utilisés.

Il est clair que certaines conditions thermodynamiques doivent être remplies pour qu'un système fondé sur le schéma réactionnel précédent puisse fonctionner. $D^*$ doit pouvoir réduire A lui-même à l'état réduit $A_{RED}$, doit pouvoir réduire $H^+$. D'autre part, $D_{OX}$ doit pouvoir oxyder $OH^-$ (ou $H_2O$). En termes de potentiels d'oxydoréduction, ces diverses conditions s'expriment par les relations suivantes:

$$E\ (D_{OX}/D^*) < E\ (A//A_{RED}) < E\ (H^+/H_2) \quad (6)$$

et

$$E\ (O_2/OH^-) < E\ (D_{OX}/D) \quad (7)$$

dans lesquelles:

E (X/X') désigne le potentiel électrochimique correspondant à la réaction:

$$X + e^- \rightarrow X'.$$

Enfin, pour arriver à un système qui ait un bon rendement dans le domaine spectral de la radiation solaire, il importe de garder le seuil d'énergie d'excitation $h\nu$ aussi peu supérieur que possible à l'énergie libre stockée (rapportée au transfert d'un électron), soit environ 1,2 eV.

Malgré les divers problèmes posés par les conditions thermodynamiques, les principales difficultés rencontrées dans la réalisation de tels systèmes fondés sur le schéma décrit précédemment proviennent en réalité de problèmes d'ordre cinétiques. En effet, chaque étape du processus peut être considérée comme une »course contre la montre« avec d'autres réactions qui tendent à ramener le système à son stade initial sans avoir stocké d'énergie chimique. Le transfert d'électron primaire (Eq. 2), par exemple, n'est qu'un mode de désactivation, parmi d'autres, de l'état excité $D^*$. Il entre en compétition avec d'autres processus tels que la luminescence ou les transferts d'énergie vibrationnelle. Au stade intermédiaire, les réactions de formation de l'oxygène et de l'hydrogène (Eqs. 3 et 4) entrent en compétition avec une réaction de transfert d'électron »inverse« qui ramène précocement le

système au stade initial:

$$D_{OX} + A_{RED} \rightarrow D + A \qquad (8)$$

Enfin, au stade final, l'accumulation de l'hydrogène et de l'oxygène est en compétition avec la réaction de reformation de l'eau: $H_2 + 1/2\ O_2 \rightarrow H_2O$. Etant donné la présence de catalyseurs dans le système, cette réaction n'est pas du tout à négliger.

Une première précaution à prendre est donc d'utiliser comme photosensibilisateur, D, un composé pour lequel le processus de désactivation radiative et non radiative ne soient pas intrinsèquement trop rapides. Une telle condition n'est pas trop difficile à remplir dans la pratique. En revanche, pour minimiser la réaction de transfert d'électron inverse (Eq. 8) par rapport à la formation d'oxygène et d'hydrogène (Eqs. 3 et 4), et pour éviter la reformation de l'eau, les moyens à mettre en œuvre sont beaucoup plus complexes, et il a d'ailleurs été impossible jusqu'à ce jour de réaliser une cellule photosensible effectivement capable d'assurer la photodécomposition de l'eau, suivant le principe décrit précédemment.

Pour surmonter un tel problème, une première approche consisterait à utiliser, pour accélérer les réactions 3 et 4, des catalyseurs aussi actifs et sélectifs que possible. L'idéal serait de pouvoir synthétiser des catalyseurs parfaitement sélectifs, soit pour la formation d'hydrogène, soit pour la formation d'oxygène, mais qui soient totalement inactifs pour la formation de l'eau. Malheureusement, de tels catalyseurs n'existent pas à l'heure actuelle.

Une seconde approche, complémentaire de la première, consisterait à organiser le système à l'échelle supramoléculaire de telle sorte que les conditions suivantes se trouvent remplies:

1. $D_{OX}$ et $A_{RED}$ se séparent l'un de l'autre dès leur formation. C'est le phénomène que l'on désignera par l'expression »séparation des charges«.
2. Les sites catalytiques pour la formation de l'hydrogène et de l'oxygène ne sont pas voisins à l'échelle moléculaire.
3. $D_{OX}$ et $A_{RED}$ migrent spontanément vers les sites catalytiques correspondants.

L'idée mère de la présente invention a donc consisté à utiliser des minéraux colloïdaux non seulement comme supports passifs des catalyseurs, mais également comme éléments organisateurs du milieu réactionnel et comme composants actifs à part entière, en tant qu'accepteurs.

Conformément à la présente invention, la cellule photosensible de décomposition de l'eau se trouve caractérisée en ce que chacun des deux catalyseurs est fixé sur un support différent et en ce que le support du catalyseur de formation d'oxygène est constitué par un premier colloïde porteur de charges négatives, et le support du catalyseur de formation d'hydrogène est constitué par un second colloïde porteur de charges positives.

Afin de permettre à $D_{OX}$, c'est-à-dire le photosensibilisateur à l'état oxydé par exemple $Ru(bpy)_3^{3+}$, de migrer spontanément vers le catalyseur de formation de l'oxygène, ce dernier catalyseur a été supporté par un premier colloïde porteur de charges négatives.

Il est clair, déjà à partir de simples considérations électrostatiques, que dans un tel système »surface négative-photosensibilisateur (ou donneur) cationique«, le transfert d'électron primaire (Eq. 2) conduira à une sélectivité d'adsorption accrue pour le donneur, puisqu'il gagne une charge positive. Un tel couplage »photosensibilisateur cationique-colloïde négatif-catalyseur de formation d'oxygène« constitue une caractéristique essentielle de la présente invention. En effet, il s'est avéré que si le photosensibilisateur n'était pas absorbé sur le colloïde négatif, la cellule photosensible de décomposition de l'eau ne fonctionnerait absolument plus.

D'autres caractéristiques et avantages de la présente invention apparaîtront à la lecture de la description détaillée faite ci-après notamment en référence à des exemples de modes de réalisation particuliers.

Le photosensibilisateur utilisé dans la cellule photosensible selon la présente invention peut être par exemple constitué par le complexe tris-(2,2'-bipyridine) ruthénium (II) [$Ru(bpy)_3^{2+}$]. Il est bien évident que la présente invention ne saurait être limitée par l'utilisation dans une cellule photosensible d'un tel photosensibilisateur particulier. En revanche, il est parfaitement possible d'utiliser tout autre photosensibilisateur adapté à la radiation solaire, susceptible d'absorber dans le domaine du visible et répondant aux conditions électrochimiques énoncées précédemment. Il est cependant essentiel qu'un tel photosensibilisateur soit de type cationique, c'est-à-dire quil soit chargé positivement tant à l'état réduit, qu'à l'état oxydé.

L'accepteur utilisé dans les cellules photosensibles selon l'invention peut être de deux types différents. Il peut tout d'abord s'agir d'un composé moléculaire neutre ou chargé négativement à l'état réduit. Un tel accepteur moléculaire migrant sera donc mobile dans la suspension aqueuse de la cellule photosensible. L'accepteur moléculaire pourra par exemple être choisi parmi les viologènes neutres tels que le propyl-sulfonate de 4,4'-bipyridinium, les chélates d'europium (III) neutres tels que le tris-salycilate d'Eu (III), le nitrilotriacétate d'Eu (III), le tris-acétylacétonate d'Eu (III), le tris-oxalate d'Eu (III), les complexes neutres d'indium (III) et les complexes neutres de chrome (III).

L'accepteur utilisable dans les cellules photosensibles selon l'invention peut également se présenter par exemple sous la forme d'ions $Eu^{3+}$ ou $In^{3+}$ directement incorporés par coprécipitation au colloïde porteur de charges positives. Cette façon de procéder améliore sensiblement la stabilité du système.

Conformément à la présente invention, le premier colloïde porteur de charges négatives, c'est-à-dire le support de catalyseur de formation d'oxygène, peut être constitué par n'importe quel solide ou polymère organique et inorganique, cristallin ou amorphe, chargé négativement et susceptible de supporter le catalyseur de formation d'oxygène.

Un tel premier colloïde porteur de charges négatives peut par exemple être avantageusement choisi parmi les tectosilicates et les phyllosilicates de grande surface (c'est-à-dire de plus de 20 m2 par gramme) qui, par suite de substitutions isomorphiques dans le réseau cristallin, portent une charge négative permanente. Un tel premier colloïde porteur de charges négatives sera par exemple avantageusement constitué par des zéolites, la montmorillonite, l'hectorite et la sépiolite. A titre d'autres exemples, on mentionnera également les polymères ou polyélectrolytes, tels que par exemple les polyvinylsulfates.

Le second colloïde porteur de charges positives, c'est-à-dire le support du catalyseur de formation d'hydrogène, peut être constitué par n'importe quel solide oligomère, polymère cristallin ou amorphe portant une charge positive permanente ou non et susceptible de fixer le catalyseur de formation d'hydrogène. A titre d'exemples de tels seconds colloïdes porteurs de charges positives on mentionnera la silice colloïdale modifiée par réglage du pH en dessous du point de charge nulle.

A titre d'autres exemples de second colloïde porteur de charges positives, on mentionnera les oligomères de type $Al_{13}O_4(OH)_{24}{}^{7+}$ qui sont préparés par hydrolyse d'un sel soluble d'aluminium, ainsi que les hydrotalcites qui sont des hydroxydes colloïdaux mixtes d'aluminium (III) et de magnésium (II). Il convient de noter ici que la silice colloïdale modifiée par ajustage du pH porte une charge positive surfacique, alors que les oligomères du type hydroxyde d'aluminium et les hydrotalcites sont en fait des colloïdes portant une charge positive intrinsèque permanente.

Les deux catalyseurs utilisés dans les cellules photosensibles objet de la présente invention, peuvent être constituées par des catalyseurs classiques de formation d'oxygène et de formation d'hydrogène.

A titre d'exemples de catalyseurs de formation d'oxygène on mentionnera tous les oxydes de métaux de transition qui ont une activité catalytique pour ce type de réaction et qui ont été largement décrits dans la littérature, notamment pour leur utilisation dans les électrodes à oxygène ou (air) des piles à combustible. A ce titre on mentionnera tout particulièrement les oxydes suivants: $RuO_2$, $IrO_2$, NiO, $OsO_2$ ainsi que les oxydes mixtes de tels métaux. De tels catalyseurs de formation d'oxygène peuvent être préparés et déposés sur le premier colloïde porteur de charges négatives par n'importe quelle méthode connue couramment utilisée dans le domaine de la catalyse hétérogène, par exemple par échange ionique-calcination, par échange ionique-décomposition, par imprégnation-calcination, par imprégnation-décomposition, par coprécipitation-décomposition ou encore par décomposition d'oxydes supérieurs.

On précisera que tous ces catalyseurs peuvent être réduits à l'état métallique avant usage. Il est clair qu'ils se réoxydent spontanément en surface en présence d'oxygène.

A titre de catalyseurs de formation d'oxygène d'un type un peu plus particulier, on mentionnera par exemple le complexe cis-Ru(II)(2,2'-bipyridine)$_2$($H_2O$)$_2{}^{2+}$ qui peut être fixé par échange cationique sur le premier colloïde porteur de charges négatives.

Le catalyseur de formation d'hydrogène peut être constitué par n'importe quel type de catalyseur électrochimique classique favorisant la réaction $H^+ + e^- \rightarrow 1/2\, H_2$. A titre d'exemples particuliers on mentionnera le platine, l'or et l'argent sous forme métallique et divisée. Ces métaux catalyseurs de formation d'hydrogène peuvent être fixés sur le second colloïde porteur de charges positives par n'importe quelle méthode classique couramment utilisée dans le domaine de la catalyse hétérogène. A titre d'exemples de tels modes de fixation on mentionnera l'échange ionique, l'imprégnation, la réduction à l'hydrogène ou avec un autre agent réducteur tel que l'hydrazine ou le citrate, auto-décomposition de complexes aminés, photodécomposition, etc.

Selon une autre caractéristique avantageuse de la présente invention, la cellule comprend une suspension aqueuse colloïdale contenant un premier colloïde porteur de charges négatives constitué par de la sépiolite sur laquelle est fixé de l'oxyde de ruthénium et sur laquelle le photosensibilisateur cationique se trouve en outre fixé par liaison ionique. Le second colloïde porteur de charges positives est constitué par un hydroxyde colloïdal mixte d'$Al^{3+}$ et de $Eu^{3+}$ ou $In^{3+}$ sur lequel est déposé le platine.

Avantageusememt, les ions $Eu^{3+}$ ou $In^{3+}$ sont incorporés au second colloïde à raison d'environ 1 à environ 5% en fraction molaire par rapport à l'aluminium.

La préparation du second colloïde porteur de charges positives incorporant des ions $Eu^{3+}$ ou $In^{3+}$ et supportant le platine s'effectue par exemple par mélange de suspensions colloïdales de l'hydroxyde avec un sel anionique de platine tel que $PtCl_4{}^{2-}$ suivie par une réduction à l'hydrazine. L'excès d'hydrazine est ensuite éliminé par lavage.

On indiquera ci-après à titre d'illustration de l'objet de l'invention deux exemples de mode opératoire pour la préparation d'une cellule colloïdale pour la photodissociation de l'eau en hydrogène et en

oxygène à l'aide de lumière visible (350—700 nm).

Exemple 1

Cellule utilisant un accepteur inclus dans le second colloïde porteur de charges positives

a) préparation du premier colloïde porteur de charges négatives

1. fixation du catalyseur ox.

On met 50 g de sépiolite en suspension dans 1 litre d'une solution aqueuse contenant 500 mg de $Ru(NH_3)_6Cl_3$. Cette suspension est agitée pendant 24 h à température ambiante. Elle est ensuite centrifugée (~30 minutes à 2000 g). Le culot de centrifugation est lavé 3 fois à l'eau distillée par des cycles de remise en suspension-centrifugation, de manière à éliminer tout excès de $Ru(NH_3)_6^{3+}$ non fixé sur la sépiolite par échange cationique. Après le lavage, la sépiolite est séchée et chauffée à 230° C à l'air pendant 3 heures, de manière à décomposer le complexe aminé de ruthénium et à l'oxyder en $RuO_2$. L'échantillon est ensuite broyé pour faciliter sa redispersion ultérieure en milieu aqueux.

2. fixation du photosensibilisateur

500 g de la sépiolite précédemment préparée sont mis en suspension dans 50 ml d'une solution aqueuse contenant 30 mg de $Ru(2,2'\text{-bipyridine})_3Cl_2 \cdot 6\,H_2O$. La suspension est agitée 15 heures et centrifugée. Le surnageant est éliminé et la sépiolite-$RuO_2$ sur laquelle le $Ru(bpy)_3^{2+}$ a été fixé par échange cationique est conservée à l'état humide.

b) Préparation du second colloïde porteur de charges positives

1. préparation du colloïde proprement dit

Une solution de 36 g de $Al(NO_3)_3 \cdot 6\,H_2O$ et 3 g de $Eu(NO_3)_3 \cdot 5\,H_2O$ est amenée à pH 9,5 avec NaOH 1N. Le gel obtenu est séparé par centrifugation et lavé une fois à l'eau distillée. Le gel final obtenu contient 3,4% de matière sèche.

2. fixation du catalyseur

3 g du gel précédemment préparé sont mis en suspension dans 500 ml d'une solution aqueuse (pH 6) contenant 50 mg de $K_2PtCl_4$. La suspension est agitée 2 heures et le platine est réduit par addition de 3 ml d'hydrazine à 90%. Le gel + platine est lavé trois fois à l'eau distillée.

c) Préparation de la cellule colloïdale

500 mg du premier colloïde porteur de charges négatives et 3 g du second colloïde porteur de charges positives sont mis en suspension dans 50 ml d'eau distillée à l'abri de la lumière. Lorsqu'une dispersion homogène est obtenue, la suspension est additionnée de 10 ml d'une solution tampon de $KH_2PO_4$ 0.02 M (pH 3,4) et l'ensemble est versé dans un réacteur cylindrique en pyrex muni d'une vanne d'entrée et d'une vanne de sortie. L'ensemble est désaéré soit par passage d'un flux d'hélium ou d'argon, soit par dégazage à l'aide d'une pompe à palette. La cellule est alors arradiée par une lampe au tungstène de 500 W située à environ 50 cm, et munie d'un filtre à UV et d'un filtre à IR. La pression des gaz est suivie par un manomètre électronique et les gaz sont analysés par chromatographie en phase gazeuse (gaz porteur: He ou Ar; colonne: tamis moléculaire 5A; température ambiante). L'irradiation de cette cellule produit effectivement de l'hydrogène et de l'oxygène. La quantité totale de gaz produits par la cellule qui vient d'être décrite est d'environ $0,2 \cdot 10^{\;3}$ Moles en 3 heures d'irradiation.

Exemple 2

Cellule utilisant un accepteur inclus dans le second colloïde porteur de charges positives

On prépare le premier colloïde porteur de charges négatives de façon entièrement identique à l'exemple 1a).

La préparation du second colloïde porteur de charges positives est également identique à celle de l'exemple 1b) à la différence toutefois que pour la préparation du colloïde proprement dit, on utilise 2 g de $In(NO_3)_3 \cdot 5\ H_2O$ à la place du nitrate d'Europium.

La cellule colloïdale ainsi préparée produit une quantité totale de gaz de $3 \cdot 10^{-6}$ moles par heure pendant plus de 24 heures.

Exemple 3

Cellule utilisant un accepteur moléculaire mobile, indépendant du second colloïde porteur de charges positives

a) Préparation du premier colloïde porteur de charges négatives

identique à la méthode suivie dans l'exemple 1.

b) Préparation du second colloïde porteur de charges positives

100 mg de gel de silice »aérosil« sont dispersés dans 500 ml d'une solution aqueuse contenant 5 mg de $K_2PtCl_4$. Le platine est réduit par addition de 3 ml d'hydrazine à 90%, et l'excès d'hydrazine est enlevé par 3 cycles de centrifugation-redispersion dans de l'eau distillée. Le gel lavé est séché à 110° C et broyé.

c) Préparation de la cellule

250 mg du premier colloïde porteur de charges négatives et 20 mg du second colloïde porteur de charges positives sont dispersés dans 50 ml d'eau tamponnée à pH 3,1 par $KH_2PO_4$. A ce pH, la surface de la silice porte une charge positive. On ajoute 150 mg de salycilate d'europium, $Eu(sal)_3$, à l'obscurité et la cellule est désaérée comme dans l'exemple 1. L'irradiation de cette cellule produit environ $0{,}07 \cdot 10^{-3}$ Moles d' $(H_2 + 1/2\ O_2)$ en 3 heures.

Bien entendu, la présente invention ne se trouve pas limitée aux modes de réalisation précédemment décrits, mais il est parfaitement possible, sans pour autant sortir du cadre de la présente invention, d'en imaginer un certain nombre de variantes d'exécution.

**Revendications**

1. Cellule photosensible de décomposition de l'eau, du type constitué par un milieu aqueux contenant un photosensibilisateur chargé positivement tant à l'état réduit qu'à l'état oxydé, un accepteur, un catalyseur de formation d'oxygène et un catalyseur de formation d'hydrogène, caractérisée en ce que chaque catalyseur est fixé sur un support différent et en ce que le support du catalyseur de formation d'oxygène est constitué par un premier colloïde porteur de charges négatives, et le support du catalyseur de formation d'hydrogène est constitué par un second colloïde porteur de charges positives.

2. Cellule selon la revendication 1, caractérisée en ce que le premier colloïde porteur de charges négatives est choisi parmi les tectosilicates et les phyllosilicates de grande surface qui, par suite de substitutions isomorphiques dans le réseau cristallin, portent une charge négative permanente.

3. Cellule selon la revendication 2, caractérisée en ce que le premier colloïde porteur de charges négatives est choisi parmi les zéolites, la montmorillonite, l'hectorite et la sépiolite.

4. Cellule selon l'une des revendications 1 à 3, caractérisée en ce que le second colloïde porteur de charges positives est une silice colloïdale modifiée par réglage du pH en dessous du point de charge nulle.

5. Cellule selon la revendication 4, caractérisée en ce que le second colloïde porteur de charges positives est choisi parmi les oligomères du type hydroxyde d'aluminium de formule $Al_{13}O_4(OH)_{24}^{7+}$ et les hydrotalcites qui sont des hydroxydes colloïdaux mixtes d'aluminium (III) et de magnésium (II).

6. Cellule selon l'une des revendications 4 et 5, caractérisée en ce que l'accepteur est un composé moléculaire neutre ou chargé négativement à l'état réduit, choisi parmi les viologènes neutres tels que le propylsulfonate de 4,4' bipyridinium, les chélates d'europium (III) neutres tels que le tris-salycilate d'Eu (III), le nitrilotriacétate d'Eu (III), le tris-acétylacétonate d'Eu (III), le tris-oxalate d'Eu (III), les complexes neutres d'indium (III) et les complexes neutres de chrome (III).

7. Cellule selon la revendication 5, caractérisée en ce que l'accepteur est sous la forme d'ions $Eu^{3+}$ ou $In^{3+}$ directement incorporés par coprécipitation au second colloïde porteur de charges positives.

8. Cellule selon la revendication 7, caractérisée en ce que les ions $Eu^{3+}$ ou $In^{3+}$ sont incorporés au

second colloïde à raison de 1 à 5% en fraction molaire.

9. Cellule selon la revendication 1, caractérisée en ce qu'elle est constituée par une suspension aqueuse colloïdale comprenant un premier colloïde porteur de charges négatives constitué par de la sépiolite sur laquelle est fixé de l'oxyde de rithénium et sur laquelle le photosensibilisateur chargé positivement se trouve fixé par liaison ionique, et un deuxième colloïde porteur de charges positives constitué par un hydroxyde colloïdal mixte d'$Al^{3+}$ et $Eu^{3+}$ ou $In^{3+}$ sur lequel est déposé du Pt.

10. Cellule selon l'une des revendications 1 à 9, caractérisée en ce que le photosensibilisateur est le complexe tris-(2,2'-bipyridine) ruthénium (II).

## Patentansprüche

1. Lichtempfindliche Zelle zur Zersetzung von Wasser, die durch ein wäßriges Milieu gebildet wird, das einen sowohl im reduzierten Zustand als auch im oxidierten Zustand positiv geladenen Photosensibilisator, einen Akzeptor, einen Katalysator zur Bildung von Sauerstoff und einen Katalysator zur Bildung von Wasserstoff enthält, dadurch gekennzeichnet, daß jeder Katalysator auf einem verschiedenen Träger fixiert ist, und daß der Träger des Katalysators zur Bildung von Sauerstoff durch einen ersten Kolloidträger von negativen Ladungen gebildet wird, und der Träger des Katalysators zur Bildung von Wasserstoff durch einen zweiten Kolloidträger von positiven Ladungen gebildet wird.

2. Zelle nach Anspruch 1, dadurch gekennzeichnet, daß der erste Kolloidträger von negativen Ladungen unter den Tektosilikaten und den Phyllosilikaten mit großer Oberfläche gewählt ist, die infolge der isomorphen Substitutionen im Kristallgitter eine dauernde negative Ladung tragen.

3. Zelle nach Anspruch 2, dadurch gekennzeichnet, daß der erste Kolloidträger von negativen Ladungen unter der Zeolithgruppe, dem Montmorillonit, dem Hectorit und dem Sepiolith gewählt ist.

4. Zelle nach einem der Ansprüche 1 bis 3, dadurch gekennzeichnet, daß der zweite Kolloidträger von positiven Ladungen eine kolloide Kieselerde ist, die durch Einstellung des pH-Wertes unterhalb des Ladungsnullpunktes modifiziert ist.

5. Zelle nach Anspruch 4, dadurch gekennzeichnet, daß der zweite Kolloidträger von positiven Ladungen unter den Oligomeren des Aluminiumhydroxidtyps mit der Formel $Al_{13}O_4(OH)_{24}{}^{7+}$ und den »hydrotalcites« gewählt ist, die kolloidale Mischoxide von Aluminium (III) und Magnesium (II) sind.

6. Zelle nach einem der Ansprüche 4 und 5, dadurch gekennzeichnet, daß der Akzeptor, im reduzierten Zustand, eine negativ geladene oder neutrale molekulare Verbindung ist, die unter den neutralen »viologenes« wie das 4,4'-Bipyridinpropylsulfonat, den neutralen Europium-Chelaten, wie das Tri-Salicylat des Europium (III), das Nitrolotriazetat des Europium (III), das Tri-Acetylacetonat des Europium (III), das Tri-Oxalat des Europium (III), den neutralen Indium (III)-Komplexen und den neutralen Chrom (III)-Komplexen gewählt ist.

7. Zelle nach Anspruch 5, dadurch gekennzeichnet, daß der Akzeptor in Form von $Eu^{3+}$- oder $In^{3+}$-Ionen vorliegt, welche durch Kopräzipitation direkt im zweiten Kolloidträger von positiven Ladungen eingebaut sind.

8. Zelle nach Anspruch 7, dadurch gekennzeichnet, daß die $Eu^{3+}$- oder $In^{3+}$-Ionen im zweiten Kolloid in einer Menge von 1 bis 5% Molanteilen eingebaut sind.

9. Zelle nach Anspruch 1, dadurch gekennzeichnet, daß sie durch eine wäßrige kolloidale Suspension gebildet wird, die einen ersten Kolloidträger von negativen Ladungen umfaßt, der durch Sepiolith gebildet wird, auf dem Ritheniumoxid fixiert ist und auf dem sich der positiv geladene Photosensibilisator durch Ionenbindung gebunden befindet, und einen zweiten Kolloidträger von positiven Ladungen umfaßt, der durch ein kolloidales Mischoxid von $Al^{3+}$ und $Eu^{3+}$ oder $In^{3+}$, auf dem Pt abgelagert ist, gebildet wird.

10. Zelle nach einem der Ansprüche 1 bis 9, dadurch gekennzeichnet, daß der Photosensibilisator der Komplex Tri-(2,2'-Bipyridin) Ruthenium (II) ist.

## Claims

1. A photosensitive cell for the decomposition of water, comprising an aqueous medium containing a photosensitizer positively charged both in the reduced state and in the oxidised state, an acceptor, an oxygen-forming catalyst, a first support to which said oxygen-forming catalyst is fixed and formed by a first, negative-charge-carying colloid, a hydrogen-forming catalyst, and a second support to which said hydrogen-forming catalyst is fixed and formed by a second, positive-charge-carrying colloid.

2. A cell as claimed in claim 1, wherein the first, negative-charge-carrying colloid is selected from large-surface tectosilicates and phyllosilicates which, as a result of isomorphic substitutions in the crystal lattice, carry a permanent negative charge.

3. A cell as claimed in claim 2, wherein the first, negative-charge-carrying colloid is selected from zeolites, montmorillonite, hectorite and sepiolite.

4. A cell as claimed in claim 1, wherein the second, positive-charge-carrying colloid is a colloidal silica modified by pH adjustment below the zero charge point.

5. A cell as claimed in claim 4, wherein the second, positive-charge-carrying colloid is selected from oligomers of the aluminium hydroxide, $Al_{13}O_4(OH)_{24}^{7+}$, type and hydrotalcites which are mixed colloidal hydroxides of aluminium (III) and magnesium (II).

6. A cell as claimed in claim 4, wherein the acceptor is a molecular compound which is neutral or negatively charged in the reduced state selected from neutral viologens, such as 4,4'-bipyridinium propyl silfonate, neutral europium (III) chelates, such as Eu (III) tris-salicylate, Eu (III) nitrilotriacetate, Eu (III) tris-acetyl acetonate, Eu (III) tris-oxalate, neutral indium (III) complexes and neutral chromium (III) complexes.

7. A cell as claimed in claim 5, wherein the acceptor is in the form of $Eu^{3+}$ or $In^{3+}$ ions directly incorporated by coprecipitation in the second, positive-charge-carrying colloid.

8. A cell as claimed in claim 7, wherein the $Eu^{3+}$ or $In^{3+}$ ions are incorporated in the second colloid in a proportion of from 1 to 5%, expressed as a molar fraction.

9. A cell as claimed in claim 1, wherein it is formed by a colloidal aqueous suspension comprising a first, negative-charge-carrying colloid formed by sepiolite to which ruthenium oxide is fixed and to which the positively charged photosensitizer is fixed by an ionic bond and a second, positive-charge-carrying colloid formed by a mixed colloidal hydroxide of $Al^{3+}$ and $Eu^{3+}$ or $In^{3+}$ on which Pt is deposited.

10. A cell as claimed in claim 1, wherein the photosensitizer is the complex tris-(2,2'-bipyridine) ruthenium (II).